# EUROPÄISCHE PATENTSCHRIFT

(11) **EP 4 281 823 B1**
(45) Veröffentlichungstag und Bekanntmachung des Hinweises auf die Patenterteilung: **31.12.2025**
(21) Anmeldenummer: 21701519.7
(22) Anmeldetag: 22.01.2021
(51) Int. Cl.: G02B 7/00, G02B 5/20, G02B 5/22

(54) **VARIABLE STRAHLMODULATION**
VARIABLE BEAM MODULATION
MODULATION DE FAISCEAU VARIABLE

(43) Veröffentlichungstag der Anmeldung: 29.11.2023
(73) Patentinhaber: TRUMPF Lasersystems for Semiconductor Manufacturing SE, 71254 Ditzingen (DE)
(72) Erfinder: PETROWITSCH, Robin, 71229 Leonberg (DE)
(74) Vertreter: Trumpf Patentabteilung
(86) Internationale Anmeldenummer: PCT/EP2021/051428
(87) Internationale Veröffentlichungsnummer: WO 2022/156901

(56) Entgegenhaltungen:
- ANONYMOUS: "90° Flip Mounts", 4 December 2020 (2020-12-04), pages 1 - 2, XP055842268, Retrieved from the Internet <URL:https://web.archive.org/web/20201204112019/https://www.thorlabs.de/newgrouppage9.cfm?objectgroup_id=1447> [retrieved on 20210917]
- ANONYMOUS: "OC1-FB Optical Filter Bank", 21 October 2020 (2020-10-21), pages 1 - 2, XP055842223, Retrieved from the Internet <URL:https://web.archive.org/web/20201021161143/https://www.newport.com/p/OC1-FB> [retrieved on 20210917]

## Beschreibung

### Hintergrund der Erfindung

Die Erfindung betrifft eine Vorrichtung und ein Verfahren zur Strahlmodulation.

Es ist bekannt, Eigenschaften eines Strahls, insbesondere eines Laserstrahls, zu modulieren. Hierzu werden Optikelemente eingesetzt, die typischerweise zu einer Veränderung der Strahlmodulation ein- und ausgebaut werden müssen. Dies ist jedoch umständlich, zeitaufwändig und erfordert detaillierte Fachkenntnisse.

Ferner sind aus dem Stand der Technik Vorrichtungen zur Strahlmodulation bekannt, bei welchen Optikelemente mittels Hebeln in einen Strahlengang ein- und ausbewegt werden können. Derartige Vorrichtungen sind beispielsweise bekannt von Herstellern wie Newport Corp. (OC1-FB Optical Filter Bank, https:// web.archive.org/web/20201021161143/https://www.newport.com/p/OC1-FB) und Thorlabs (90° Flip Mounts, https://web.archive.org/web/20201204112019/https://www.thorlabs.de/ newgrouppage9.cfm?objectgroup_id=1447).

### Aufgabe der Erfindung

Es ist eine Aufgabe der Erfindung, eine Vorrichtung und ein Verfahren zur signifikant vereinfachten variablen Strahlmodulation bereit zu stellen.

### Beschreibung der Erfindung

Diese Aufgabe wird erfindungsgemäß gelöst durch eine Vorrichtung gemäß Patentanspruch 1 und ein Verfahren gemäß Patentanspruch 12. Die Unteransprüche geben bevorzugte Weiterbildungen wieder.

Die erfindungsgemäße Aufgabe wird somit gelöst durch eine Vorrichtung zur Strahlmodulation, wobei die Strahlmodulation durch Ein- und Ausbewegen von Optikelementen in einen bzw. aus einem Strahlengang erfolgt. Die Vorrichtung weist einen ersten Hebel mit einem ersten Optikelement und einen zweiten Hebel mit einem zweiten Optikelement auf. Die Vorrichtung weist weiterhin eine Stelleinrichtung auf. Die Stelleinrichtung ist dazu ausgebildet, den ersten Hebel und den zweiten Hebel zu bewegen. Hierdurch können das erste Optikelement und das zweite Optikelement in den und aus dem Strahlengang bewegt werden. Darüber hinaus weist die Stelleinrichtung eine Stufenscheibe auf, wobei die Hebel durch Stufen der Stufenscheibe bewegbar sind.

Der aufwändige Ein- und Ausbau von Optikelementen wird vermieden. Die Zeit zur Umrüstung der Vorrichtung kann auf weniger als 5% reduziert werden. Das erste Optikelement ist vorzugsweise in einer Optikfassung des ersten Hebels angeordnet oder ausgebildet. Das zweite Optikelement ist vorzugsweise in einer Optikfassung des zweiten Hebels angeordnet oder ausgebildet.

Um die Strahleigenschaften besser modulieren zu können, kann die Vorrichtung einen dritten Hebel mit einem dritten Optikelement aufweisen. Die Stelleinrichtung kann in diesem Fall dazu ausgebildet sein, das dritte Optikelement in den und aus dem Strahlengang zu bewegen. Mit anderen Worten kann die Vorrichtung dazu ausgebildet sein, das erste Optikelement, das zweite Optikelement und das dritte Optikelement in den Strahlengang einzubringen und aus dem Strahlengang auszubringen, ohne aufwändige Ein- und Ausbaumaßnahmen vornehmen zu müssen. Das dritte Optikelement ist vorzugsweise in einer Optikfassung des dritten Hebels angeordnet oder ausgebildet.

Vorzugsweise sind mehrere Hebel, insbesondere alle Hebel, mit einer beidenends gehaltenen Achse der Vorrichtung gelagert.

Die Stufen können an der Stufenscheibe angeordnet oder - bevorzugt - einteilig mit der Stufenscheibe ausgebildet sein. Die Stufenscheibe bzw. Nockenscheibe stellt eine konstruktiv einfache mechanische Vorrichtung zum Bewegen der Hebel dar. Vorzugsweise sind die Hebel durch Stufen der Stufenscheibe verschwenkbar. Die Stufen der Stufenscheibe sind dabei vorzugsweise an der Stirnseite - und nicht entlang der Umfangsfläche (wie bei einem Zahnkranz) der Stufenscheibe - angeordnet. Die Hebel können jeweils einen, insbesondere langen, Hebelarm mit dem Optikelement und einen, insbesondere kurzen, Hebelarm aufweisen, wobei der eine, insbesondere kurze, Hebelarm durch die Stufen bzw. Nocken betätigbar ist, um die Hebel um einen Drehpunkt zu verschwenken.

Die Stufenscheibe ist vorzugsweise um ihre Hauptachse drehbar gelagert. "Drehbar" umfasst dabei erfindungsgemäß auch Schwenkbewegungen von weniger als 360°.

Die Hebel sind weiter bevorzugt jeweils durch auf der Stufenscheibe radial versetzte Stufen bewegbar. Die Hebel sind dadurch unabhängig voneinander betätigbar.

Alternativ oder zusätzlich dazu können mehrere Stufen umfänglich versetzt sein, sodass zumindest bei einer abschnittsweisen Drehung der Stufenscheibe nur ein Optikelement eingewechselt wird. Hierdurch wird eine besonders gleichmäßige Belastung bei der Betätigung der Stelleinrichtung erreicht. Alternativ oder zusätzlich dazu können die Stufen auf der Stufenscheibe auch derart umfänglich versetzt angeordnet sein, dass bei einer abschnittsweisen Drehung der Stufenscheibe zwei oder mehr Optikelemente gleichzeitig eingewechselt werden. Auf diese Weise können zwei oder mehr Optikelemente besonders effizient in den Strahlengang eingebracht werden.

Die Stufen können dabei so angeordnet oder ausgebildet sein, dass die Hebel nacheinander folgende Bewegungen ausführen können:
a) Erstes Optikelement in den Strahlengang einwechseln;
b) erstes Optikelement aus dem Strahlengang auswechseln und zweites Optikelement einwechseln;
c) erstes Optikelement einwechseln.

Die Bewegungen können vorzugsweise als Schwenkbewegungen ausgeführt werden.

Im Fall von zumindest drei Hebeln können die Stufen so angeordnet oder ausgebildet sein, dass das dritte Optikelement in den vorgenannten Schritten a) bis c) ausgewechselt ist und die Hebel nach den Bewegungen a) bis c) folgende Bewegungen ausführen können:
d) Erstes Optikelement auswechseln, zweites Optikelement auswechseln und drittes Optikelement einwechseln;
e) erstes Optikelement einwechseln;
f) erstes Optikelement auswechseln und zweites Optikelement einwechseln;
g) erstes Optikelement einwechseln.

Die Bewegungen können vorzugsweise als Schwenkbewegungen ausgeführt werden.

Vor dem Verfahrensschritt a) und/oder nach dem Verfahrensschritt g) kann/können die Optikelemente aus dem Strahlengang, insbesondere durch Ausbildung/Anordnung keiner Stufe, auswechselbar sein.

Die Vorrichtung kann eine oder mehrere Federn aufweisen, um die Optikelemente im ausgewechselten bzw. ausbewegten Zustand in eine vordefinierte Stellung zu bewegen.

Eine konstruktiv einfache Umsetzung der Erfindung erfolgt, wenn die Stelleinrichtung eine Stirnraduntersetzung aufweist und wobei die Stufenscheibe durch die Stirnraduntersetzung der Stelleinrichtung angetrieben werden kann.

Die Vorrichtung kann eine biegbare Welle aufweisen. Die biegbare Welle ermöglicht eine flexible Positionierung der Stelleinrichtung.

Die Optikelemente sind vorzugsweise bis auf ihre Stärke der optischen Wirkung gleich ausgebildet. Die Stärke der optischen Wirkung der Optikelemente steigt vorzugsweise in Bezug auf ein anderes der Optikelemente jeweils um einen Faktor, insbesondere um den Faktor zwei.

In besonders bevorzugter Ausgestaltung der Vorrichtung weisen die Optikelemente jeweils einen Absorber auf. Weiter bevorzugt sind die Optikelemente in Form jeweils eines Absorbers ausgebildet. Die Absorber sind vorzugsweise plattenförmig ausgebildet. Besonders bevorzugt weist das zweite Optikelement die doppelte Dicke des ersten Optikelements auf. Weiter bevorzugt weist das dritte Optikelement die doppelte Dicke des zweiten Optikelements auf.

Gemäß den vorgenannten Schritten a) bis c) wird dann eine einfache Absorberdicke, gefolgt von einer doppelten Absorberdicke, gefolgt von einer dreifachen Absorberdicke in den Strahlengang einbewegt bzw. eingewechselt. Mit anderen Worten wird die Absorption stufenweise erhöht.

Gemäß den vorgenannten Schritten d) bis g) wird dann eine vierfache Absorberdicke, gefolgt von einer fünffachen Absorberdicke, gefolgt von einer sechsfachen Absorberdicke, gefolgt von einer siebenfachen Absorberdicke in den Strahlengang einbewegt.

Weiter bevorzugt weisen die Absorber jeweils eine CaF₂-Platte auf. Besonders bevorzugt sind die Absorber jeweils in Form einer CaF₂-Platte ausgebildet.

Die Vorrichtung weist vorzugsweise einen Laser zur Erzeugung eines im Strahlengang verlaufenden Strahls, d.h. eines Strahls in Form eines Laserstrahls, auf. Vorzugsweise ist der Laser zur Abgabe eines Infrarot (IR)-Laserstrahls ausgebildet. Der Laser kann in Form eines CO₂-Lasers ausgebildet sein.

Die Vorrichtung kann einen Detektor zur Messung von Strahleigenschaften des im Strahlengang verlaufenden Strahls aufweisen. Der Detektor ist vorzugsweise in Form eines photoelektromagnetischen (PEM) Detektors ausgebildet.

Weiter bevorzugt kann die Vorrichtung eine Extrem-Ultraviolettes-Licht-(EUV)-Erzeugungseinrichtung aufweisen. Die EUV-Erzeugungseinrichtung weist dabei den vorgenannten Laser zur Erzeugung des im Strahlengang verlaufenden Strahls auf. Der durch den Laser erzeugte Strahl wird vorzugsweise durch einen oder mehrere Verstärkerlaser verstärkt und vorzugsweise auf ein in der EUV-Erzeugungseinrichtung ("EUV-Anlage") erzeugbares Zinntröpfchen gerichtet. In dem Zinntröpfchen kann dann ein Plasma entstehen, das die EUV-Strahlung emittiert.

Die erfindungsgemäße Aufgabe wird weiterhin gelöst durch ein Verfahren zur Strahlmodulation mit einer hier beschriebenen Vorrichtung. Die Vorrichtung weist dabei zumindest zwei Hebel auf, die jeweils ein Optikelement aufweisen, wobei die Hebel nacheinander folgende Bewegungen ausführen:
a) Erstes Optikelement in den Strahlengang einwechseln;
b) erstes Optikelement aus dem Strahlengang auswechseln und zweites Optikelement einwechseln;
c) erstes Optikelement einwechseln.

Die Bewegungen der Hebel werden vorzugsweise als Schwenkbewegungen ausgeführt.

Die Vorrichtung kann zumindest einen dritten Hebel mit einem dritten Optikelement aufweisen, wobei das dritte Optikelement während der Verfahrensschritte a) bis c) ausbewegt ist und das Verfahren folgende weitere Verfahrensschritte aufweist:
d) Erstes Optikelement auswechseln, zweites Optikelement auswechseln und drittes Optikelement einwechseln;
e) erstes Optikelement einwechseln;
f) erstes Optikelement auswechseln und zweites Optikelement einwechseln;
g) erstes Optikelement einwechseln.

Die Bewegungen werden vorzugsweise als Schwenkbewegungen ausgeführt.

Vor dem Verfahrensschritt a) und/oder nach dem Verfahrensschritt g) kann/können die Optikelemente aus dem Strahlengang, insbesondere durch Ausbildung/Anordnung keiner Stufe, entfernt werden (Gesamtstärke null Optikelemente). Weitere Vorteile der Erfindung ergeben sich aus der Beschreibung und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine isometrische Ansicht einer erfindungsgemäßen Vorrichtung zur Strahlmodulation.
- Fig. 2: zeigt eine weitere Ansicht der Vorrichtung mit abgenommener Abdeckung.
- Fig. 3: zeigt eine teilweise geschnittene Ansicht der Vorrichtung, aus der plattenförmige Optikelemente ersichtlich sind, die in Hebeln aufgenommen sind.
- Fig. 4: zeigt eine weitere Ansicht der Vorrichtung, aus der Betätigungen der Hebel durch eine Stufenscheibe ersichtlich sind.
- Fig. 5: zeigt eine Seitenansicht der Vorrichtung, die die Betätigung der Hebel durch die Stufen der Stufenscheibe weiter verdeutlicht.
- Fig. 6: zeigt eine Ansicht der Stufenscheibe zur Verdeutlichung der Stufen.

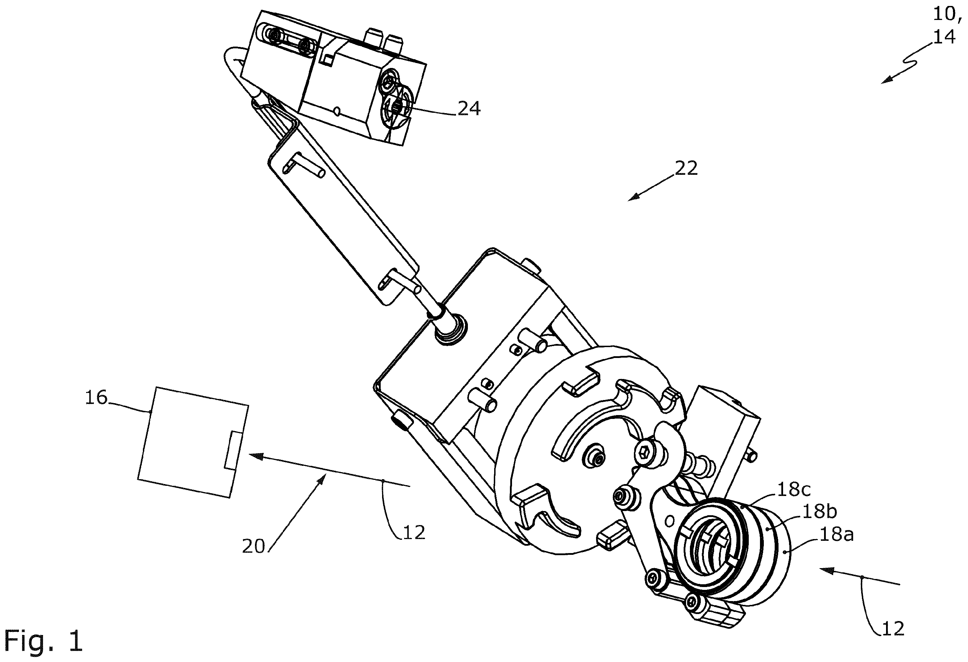

**Fig. 1** zeigt eine Vorrichtung **10** zur Modulation eines Strahls **12,** hier in Form eines Laserstrahls. Der Strahl 12 dient der Erzeugung von EUV-Strahlung durch eine EUV-(Extrem-Ultraviolettes-Licht)-Erzeugungsanlage **14.** Die Erzeugung der EUV-Strahlung erfolgt durch Beschuss eines Zinntröpfchens (nicht gezeigt) mit dem Strahl 12. Im in Fig. 1 gezeigten Teil der Vorrichtung 10 wird der Strahl 12 nicht auf das Zinntröpfchen gerichtet, sondern zu seiner Charakterisierung zumindest teilweise ausgekoppelt und in einem Detektor **16** analysiert. Der Detektor 16 ist dabei vorzugsweise in Form eines photoelektromagnetischen (PEM) Detektors ausgebildet.

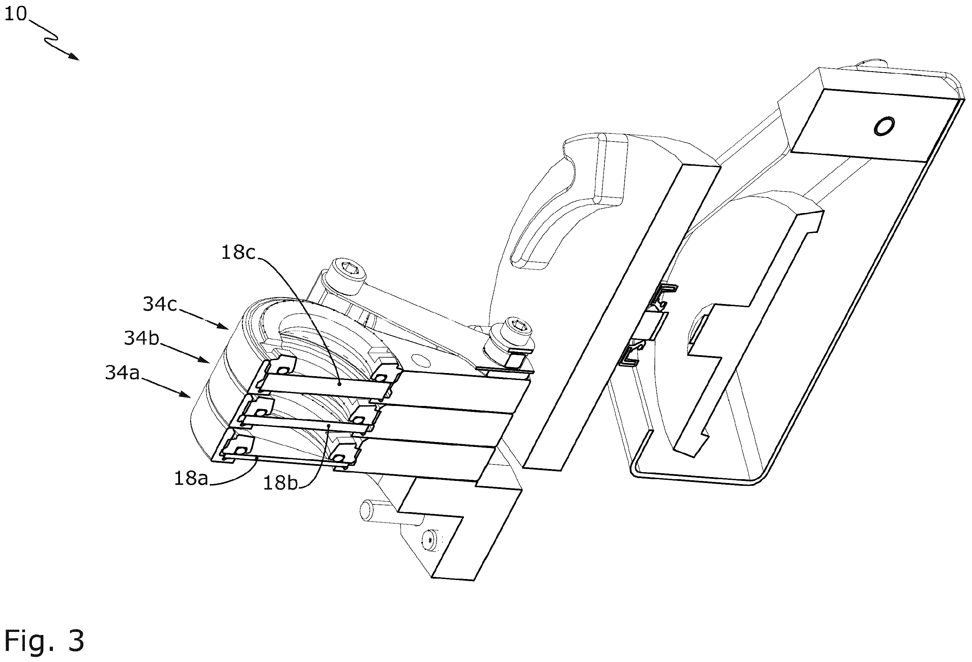

Da der Strahl 12 aufgrund seiner hohen Leistung den Detektor 16 beschädigen würde, sind Optikelemente **18a, 18b, 18c** (besser sichtbar in Fig. 3), hier in Form von Absorbern, vorgesehen. Die Optikelemente 18a-c können je nach Bedarf in einen Strahlengang **20** des Strahls 12 eingebracht werden. Zum Ein- und Ausbringen der Optikelemente 18a-c ist eine Stelleinrichtung **22** vorgesehen.

Die Betätigung der Stelleinrichtung 22 kann von Hand und/oder durch einen Aktuator (nicht gezeigt), beispielsweise einen Elektromotor, erfolgen. Im vorliegenden Fall ist ein Werkzeugeingriff **24** zur Anordnung eines Werkzeugs (nicht gezeigt) vorgesehen, um die Stelleinrichtung 22 händisch zu betätigen. In den Werkzeugeingriff 24 ist vorzugsweise ein Werkzeug in Form eines Mehrkantschlüssels einführbar.

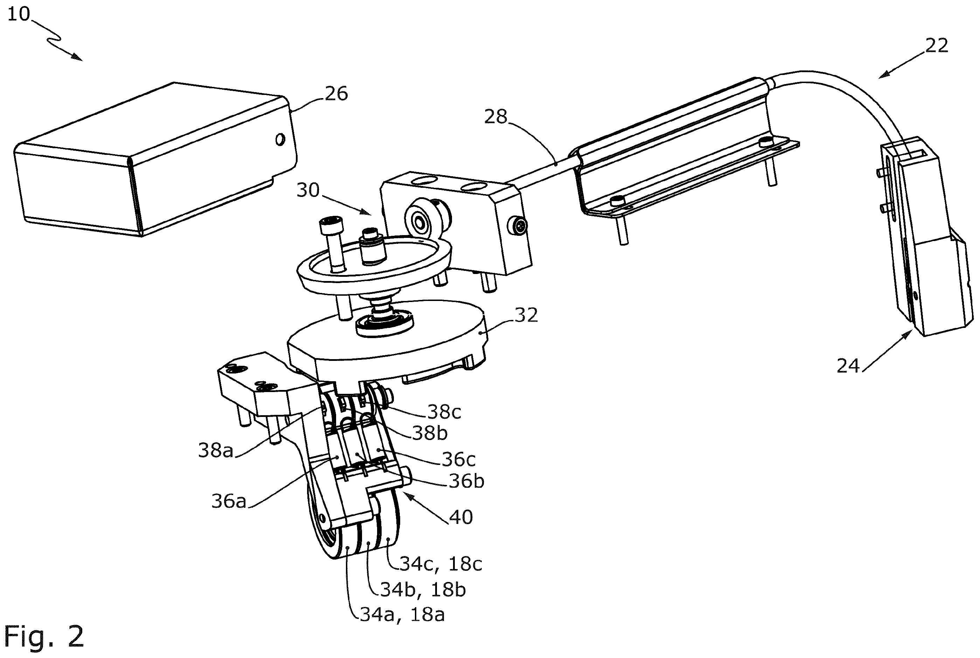

**Fig. 2** zeigt die Vorrichtung 10, wobei eine Abdeckung **26** entfernt wurde. Aus Fig. 2 ist ersichtlich, dass eine Betätigung des Werkzeugeingriffs 24 über eine, hier biegsame, Welle **28** erfolgen kann. Die biegsame Welle 28 erlaubt eine flexible Positionierung und Betätigung des Werkzeugeingriffs 24.

Die Drehung der Welle 28 ist über eine Stirnraduntersetzung **30** auf eine Stufenscheibe **32** der Stelleinrichtung 22 übertragbar. Die Stufenscheibe 32 dient dem Bewegen, insbesondere Einschwenken, von Hebeln **34a, 34b, 34c** in den Strahlengang 20 (siehe Fig. 1). Die Hebel 34a-c weisen die Optikelemente 18a-c auf.

Wenn die Hebel 34a-c nicht durch die Stufenscheibe 32 betätigt werden, werden sie von Federn **36a, 36b, 36c** aus dem Strahlengang 20 (siehe Fig. 1) bewegt. Die Federn 36a-c sind dabei einenends in Haken **38a, 38b, 38c** der Hebel 34a-c eingehängt. In Fig. 2 ist das Einhängen der Federn 36a-c in die Haken 38a-c aus Darstellungsgründen nicht gezeigt. Anderenends sind die Federn 36a-c an einer Halterung **40** angeordnet.

**Fig. 3** zeigt die Vorrichtung 10 in teilweise geschnittener Darstellung. Aus Fig. 3 ist ersichtlich, dass die Optikelemente 18a-c in den Hebeln 34a-c aufgenommen bzw. gefasst sind. Die Optikelemente 18a-c sind in Form von, insbesondere plattenförmigen, Absorbern ausgebildet. Vorliegend sind die Optikelemente 18a-c in Form von CaF₂-Platten ausgebildet. Das Optikelement 18b weist dabei die doppelte Dicke auf wie das Optikelement 18a. Das Optikelement 18c weist die doppelte Dicke auf wie das Optikelement 18b. Je nach Kombination der eingeschwenkten Optikelemente 18a-c entsteht durch Addition der Absorption der Optikelemente 18a-c ein Gesamtabsorber mit einfacher, zweifacher, dreifacher, vierfacher, fünffacher, sechsfacher oder siebenfacher Dicke des Optikelements 18a.

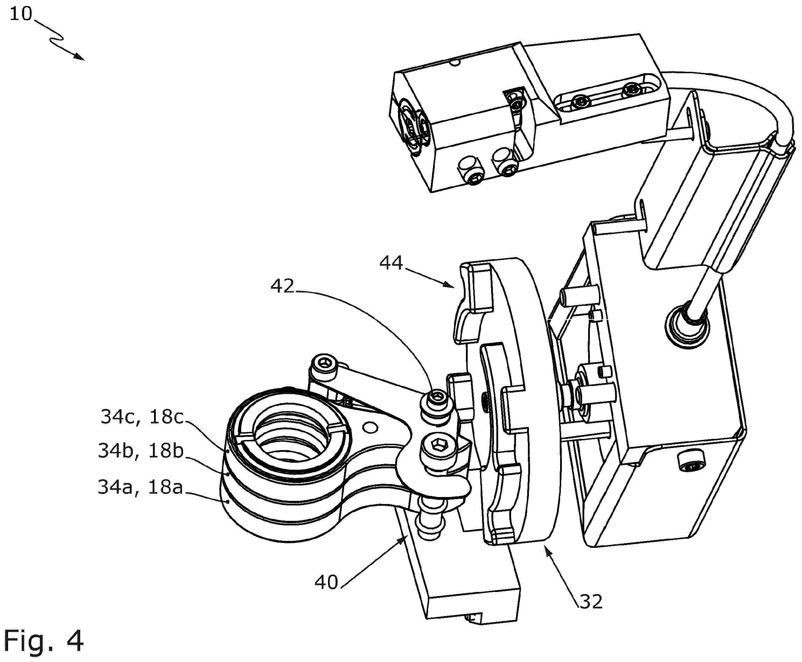

**Fig. 4** zeigt die Vorrichtung 10, wobei aus Fig. 4 ersichtlich ist, dass die Hebel 34a-c an einer, insbesondere gemeinsamen, Achse **42** drehbar gelagert sind. Die Achse 42 ist vorzugsweise beidenends an der Halterung 40 gelagert. Die Hebel 34a-c weisen jeweils einen langen Hebelarm mit dem Optikelement 18a-c und einen kurzen Hebelarm auf. Der kurze Hebelarm wird von Stufen **44** der Stufenscheibe 32 betätigt. Die Stufen 44 sind vorzugsweise einstückig mit der Stufenscheibe 32 ausgebildet. Durch eine Drehung der Stufenscheibe 32 pressen die Stufen 44 gegen die, insbesondere kurzen, Hebelarme der Hebel 34a-c, um die Hebel 34a-c auszulenken und dadurch die Optikelemente 18a-c in den Strahlengang 20 (siehe Fig. 1) einzubewegen, insbesondere einzuschwenken.

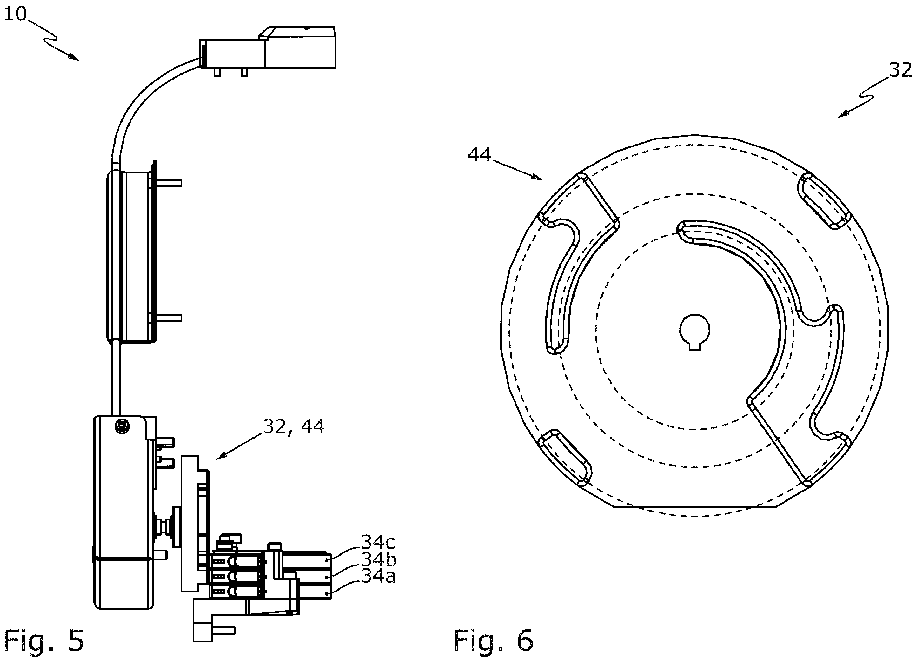

**Fig. 5** zeigt die Vorrichtung 10 in einer Seitenansicht. Aus Fig. 5 ist ersichtlich, dass die Hebel 34a-c zueinander radial versetzt an der Stufenscheibe 32 angeordnet sind. Die Hebel 34a-c können dadurch, je nach Anordnung bzw. Ausbildung der Stufen 44, unabhängig voneinander durch die Stufenscheibe 32 betätigt werden.

**Fig. 6** zeigt die Stufenscheibe 32 in einer Draufsicht. Gestrichelte Linien deuten die Betätigung der Hebel 34a-c an, wobei der Hebel 34a radial außen, der Hebel 34b radial mittig und der der Hebel 34c radial innen betätigt werden (siehe Fig. 5). Aus einer Zusammenschau der Fig. 5 mit der Fig. 3 wird deutlich, dass bei einer Drehung der Stufenscheibe 32 folgende Hebel 34a-c bzw. Optikelemente 18a-c betätigt werden, um folgende Gesamtstärke der Optikelemente 18a-c in den Strahlengang 20 (siehe Fig. 1) einzubringen:

| Verfahrensschritt | Optikelemente einbewegen | Optikelemente ausbewegen | Optikelemente im Strahlengang | Gesamtstärke der Optikelemente im Strahlengang in Dicke(n) des Optikelements 18a |
|---|---|---|---|---|
| a) | 18a | | 18a | 1 |
| b) | 18b | 18a | 18b | 2 |
| c) | 18a | | 18a, b | 3 |
| d) | 18c | 18a, b | 18c | 4 |
| e) | 18a | | 18a, c | 5 |
| f) | 18b | 18a | 18b, c | 6 |
| g) | 18a | | 18a, b, c | 7 |

Durch die Stufenscheibe 32 kann die gesamte Wirkstärke der Optikelemente 18a-c stufenweise linear erhöht werden.

Vor dem Verfahrensschritt a) und/oder nach dem Verfahrensschritt g) kann/können die Optikelemente 18a-c aus dem Strahlengang 20 (siehe Fig. 1), insbesondere durch Ausbildung/Anordnung keiner Stufe 44, entfernt werden (Gesamtstärke null Optikelemente).

Vorzugsweise wird - wie im vorliegenden Ausführungsbeispiel - im Verlauf der Drehung der Stufenscheibe 32 immer nur ein Optikelement 18a-c in den Strahlengang 20 (siehe Fig. 1) bewegt. Das Ausbewegen erfolgt über die Federn 36a-c, wenn die Hebel 34a-c unbetätigt sind.

Unter Vornahme einer Zusammenschau aller Figuren der Zeichnung betrifft die Erfindung eine Vorrichtung 10 und ein Verfahren zum einfachen Einbringen mehrerer Optikelemente 18a-c in einen Strahlengang 20, insbesondere in den Strahlengang 20 einer EUV-Erzeugungsanlage 14. Die Vorrichtung 10 weist dabei erfindungsgemäß eine Stufenscheibe 32 mit Stufen 44 auf, die dazu ausgebildet sind, die Optikelemente 18a-c mittelbar oder unmittelbar in den Strahlengang 20 zu bewegen. Weiter bevorzugt sind Federn 36a-c vorgesehen, die die Optikelemente 18a-c mittelbar oder unmittelbar aus dem Strahlengang 20 bewegen, wenn keine mittelbare oder unmittelbare Betätigung der Optikelemente 18a-c durch die Stufe(n) 44 vorliegt. Die Stufenscheibe 32 ist insbesondere mittelbar oder unmittelbar durch eine biegsame Welle 28 drehbar. Es sind Hebel 34a-c vorgesehen, die jeweils einenends durch die Stufen 44 betätigbar sein können und anderenends die Optikelemente 18a-c aufweisen können. Die Stärke der optischen Wirkung der Optikelemente 18a-c steigt bezüglich eines anderen der Optikelemente 18a-c vorzugsweise jeweils um einen gleichen Faktor, insbesondere um den Faktor zwei.

### Bezugszeichenliste

- 10: Vorrichtung
- 12: Strahl
- 14: EUV-Erzeugungsanlage
- 16: Detektor
- 18a-c: Optikelement
- 20: Strahlengang
- 22: Stelleinrichtung
- 24: Werkzeugeingriff
- 26: Abdeckung
- 28: Welle
- 30: Stirnraduntersetzung
- 32: Stufenscheibe
- 34a-c: Hebel
- 36a-c: Feder
- 38a-c: Haken
- 40: Halterung
- 42: Achse
- 44: Stufe

## Patentansprüche

1. Vorrichtung (10) zur Strahlmodulation durch Ein- und Ausbewegen von Optikelementen (18a-c) in einen und aus einem Strahlengang (20), wobei die Vorrichtung (10) Folgendes aufweist:
- Einen ersten Hebel (34a-c) mit einem ersten Optikelement (18a-c);
- einen zweiten Hebel (34a-c) mit einem zweiten Optikelement (18a-c);
- eine Stelleinrichtung (22) zum Bewegen des ersten Hebels (34a-c), um das erste Optikelement (18a-c) in den Strahlengang (20) und aus dem Strahlengang (20) zu bewegen, und zum Bewegen des zweiten Hebels (34a-c), um das zweite Optikelement (18a-c) in den Strahlengang (20) und aus dem Strahlengang (20) zu bewegen,
**dadurch gekennzeichnet, dass**
die Stelleinrichtung (22) eine Stufenscheibe (32) aufweist, wobei die Hebel (34a-c) durch Stufen (44) der Stufenscheibe (32) bewegbar sind.

2. Vorrichtung nach Anspruch 1, bei der die Vorrichtung (10) einen dritten Hebel (34a-c) mit einem dritten Optikelement (18a-c) aufweist, wobei die Stelleinrichtung (22) zum Bewegen des dritten Hebels (34a-c) ausgebildet ist, um das dritte Optikelement (18a-c) in den Strahlengang (20) und aus dem Strahlengang (20) zu bewegen.

3. Vorrichtung nach Anspruch 1 oder 2, bei der die Hebel jeweils durch auf der Stufenscheibe (32) radial versetzte Stufen (44) bewegbar sind.

4. Vorrichtung nach einem der vorhergehenden Ansprüche, bei der mehrere Stufen (44) umfänglich versetzt sind, sodass zumindest bei einer abschnittsweisen Drehung der Stufenscheibe (32) nur ein Optikelement (18a-c) in den Strahlengang (20) einbewegt wird.

5. Vorrichtung nach Anspruch 4, bei der die Stufen (44) so angeordnet oder ausgebildet sind, dass die Hebel (34a-c) mit den Optikelementen (18a-c) nacheinander folgende Bewegungen ausführen können:
a) Erstes Optikelement (18a-c) in den Strahlengang (20) einbewegen;
b) erstes Optikelement (18a-c) aus dem Strahlengang (20) ausbewegen und zweites Optikelement (18a-c) einbewegen;
c) erstes Optikelement (18a-c) einbewegen.

6. Vorrichtung nach Anspruch 5 in Verbindung mit Anspruch 2, bei der die Stufen (44) so angeordnet oder ausgebildet sind, dass das dritte Optikelement (18a-c) bei den Bewegungen a) bis c) ausbewegt ist und die Hebel mit den Optikelementen (18a-c) nacheinander folgende Bewegungen ausführen können:
d) Erstes Optikelement (18a-c) ausbewegen, zweites Optikelement (18a-c) ausbewegen und drittes Optikelement (18a-c) einbewegen;
e) erstes Optikelement (18a-c) einbewegen;
f) erstes Optikelement (18a-c) ausbewegen und zweites Optikelement (18a-c) einbewegen;
g) erstes Optikelement (18a-c) einbewegen.

7. Vorrichtung nach einem der vorhergehenden Ansprüche, bei der die Vorrichtung (10) eine oder mehrere Federn (36-c) aufweist, um die Hebel (34a-c) im von der Stelleinrichtung (22) unbetätigten Zustand in eine vordefinierte Stellung zu bewegen.

8. Vorrichtung nach einem der vorhergehenden Ansprüche, wobei die Stelleinrichtung eine Stirnraduntersetzung (30) aufweist und wobei die Stufenscheibe (32) durch die Stirnraduntersetzung (30) der Stelleinrichtung (22) angetrieben werden kann.

9. Vorrichtung nach einem der vorhergehenden Ansprüche, bei der die Stelleinrichtung (22) eine biegbare Welle (28) aufweist.

10. Vorrichtung nach einem der vorhergehenden Ansprüche, bei der die Optikelemente (18a-c) jeweils einen Absorber aufweisen.

11. Vorrichtung nach Anspruch 11, bei der die Absorber jeweils eine CaF₂-Platte aufweisen.

12. Verfahren zur Modulation eines Strahls (12) mit einer Vorrichtung (10) nach einem der vorhergehenden Ansprüche, wobei die Vorrichtung (10) zumindest zwei Hebel (34a-c) aufweist, die jeweils ein Optikelement (18a-c) aufweisen und das Verfahren nacheinander folgende Verfahrensschritte aufweist:
a) Erstes Optikelement (18a-c) in den Strahlengang (20) einbewegen;
b) erstes Optikelement (18a-c) aus dem Strahlengang (20) ausbewegen und zweites Optikelement (18a-c) einbewegen;
c) erstes Optikelement (18a-c) einbewegen.

## Claims

1. A device (10) for beam modulation by inward and outward moving of optical elements (18a-c) into and out of a beam path (20), wherein the device (10) comprises the following:
- a first lever (34a-c) with a first optical element (18a-c);
- a second lever (34a-c) with a second optical element (18a-c);
- an adjusting apparatus (22) for moving the first lever (34a-c) in order to move the first optical element (18a-c) into the beam path (20) and out of the beam path (20), and to move the second lever (34a-c) in order to move the second optical element (18a-c) into the beam path (20) and out of the beam path (20),
**characterized in that**
the adjusting apparatus (22) comprises a stepped disc (32), wherein the levers (34a-c) are movable through steps (44) of the stepped disc (32).

2. The device according to claim 1, in which the device (10) comprises a third lever (34a-c) with a third optical element (18a-c), wherein the adjusting apparatus (22) is designed to move the third lever (34a-c) in order to move the third optical element (18a-c) into the beam path (20) and out of the beam path (20).

3. The device according to claim 1 or 2, in which each of the levers is movable through radially offset steps (44) on the stepped disc (32).

4. The device according to one of the preceding claims, in which a plurality of steps (44) are offset circumferentially so that, at least when the stepped disc (32) is rotated sectionally, only one optical element (18a-c) is moved into the beam path (20).

5. The device according to claim 4, in which the steps (44) are arranged or designed such that the levers (34a-c) with the optical elements (18a-c) can carry out the following movements in succession:
a) moving the first optical element (18a-c) into the beam path (20);
b) moving the first optical element (18a-c) out of the beam path (20) and moving the second optical element (18a-c) in;
c) moving the first optical element (18a-c) in.

6. The device according to claim 5 in connection with claim 2, in which the steps (44) are arranged or designed such that in the case of the movements a) to c), the third optical element (18a-c) is moved out and the levers with the optical elements (18a-c) can carry out the following movements in succession:
d) moving the first optical element (18a-c) out, moving the second optical element (18a-c) out and moving the third optical element (18a-c) in;
e) moving the first optical element (18a-c) in;
f) moving the first optical element (18a-c) out and moving the second optical element (18a-c) in;
g) moving the first optical element (18a-c) in.

7. The device according to any of the preceding claims, in which the device (10) comprises one or more springs (36-c) for moving the levers (34a-c) to a predefined position when they are in the state of not being acted upon by the adjusting apparatus (22).

8. The device according to any of the preceding claims, wherein the adjusting apparatus comprises a spur gear reduction (30), and wherein the stepped disc (32) can be driven by the spur gear reduction (30) of the adjusting apparatus (22).

9. The device according to any of the preceding claims, in which the adjusting apparatus (22) comprises a bendable shaft (28).

10. The device according to any of the preceding claims, in which each of the optical elements (18a-c) comprises an absorber.

11. The device according to claim 11 in which each of the absorbers comprises a CaF₂ plate.

12. A method for modulating a beam (12) with a device (10) according to any of the preceding claims, wherein the device (10) comprises at least two levers (34a-c), each of which comprises an optical element (18a-c), and the method comprises the following method steps in succession:
a) moving the first optical element (18a-c) into the beam path (20);
b) moving the first optical element (18a-c) out of the beam path (20) and moving the second optical element (18a-c) in;
c) moving the first optical element (18a-c) in.

## Revendications

1. Dispositif (10) de modulation de faisceau par déplacement d'éléments optiques (18a-c) dans et hors d'un trajet de faisceau (20), dans lequel le dispositif (10) comporte :
- un premier levier (34a-c) avec un premier élément optique (18a-c) ;
- un deuxième levier (34a-c) avec un deuxième élément optique (18a-c) ;
- un dispositif de réglage (22) permettant de déplacer le premier levier (34a-c) pour déplacer le premier élément optique (18a-c) sur le trajet du faisceau (20) dans et hors du trajet du faisceau (20), et permettant de déplacer le deuxième levier (34a-c) pour déplacer le deuxième élément optique (18a-c) dans le trajet du faisceau (20) et hors du trajet du faisceau (20),
**caractérisé en ce que**
le dispositif de réglage (22) comporte un disque à échelons (32), dans lequel les leviers (34a-c) sont déplaçables par des échelons (44) du disque à échelons (32).

2. Dispositif selon la revendication 1, dans lequel le dispositif (10) comporte un troisième levier (34a-c) avec un troisième élément optique (18a-c), dans lequel le dispositif de réglage (22) est conçu pour déplacer le troisième levier (34a-c) afin de déplacer le troisième élément optique (18a-c) dans le trajet du faisceau (20) et hors du trajet du faisceau (20).

3. Dispositif selon la revendication 1 ou 2, dans lequel les leviers sont déplaçables chacun par des échelons (44) décalés radialement sur le disque à échelons (32).

4. Dispositif selon l'une des revendications précédentes, dans lequel lesdits plusieurs échelons (44) sont décalés circonférentiellement, de telle sorte qu'au moins lors d'une rotation par sections du disque à échelons (32) un seul élément optique (18a-c) soit déplacé dans le trajet du faisceau (20).

5. Dispositif selon la revendication 4, dans lequel les échelons (44) sont agencés ou conçus de telle sorte que les leviers (34a-c) comportant les éléments optiques (18a-c) puissent effectuer successivement les déplacements suivants :
a) déplacement vers l'intérieur du premier élément optique (18a-c) dans le trajet du faisceau (20) ;
b) déplacement vers l'extérieur du premier élément optique (18a-c) hors du trajet du faisceau (20) et déplacement vers l'intérieur du deuxième élément optique (18a-c) ;
c) déplacement vers l'intérieur du premier élément optique (18a-c).

6. Dispositif selon la revendication 5 en liaison avec la revendication 2, dans lequel les échelons (44) sont agencés ou conçus de telle sorte que le troisième élément optique (18a-c) soit déplacé vers l'extérieur pendant les déplacements a) à c) et que les leviers comportant les éléments optiques (18a-c) puissent effectuer successivement les déplacements suivants :
d) déplacement vers l'extérieur du premier élément optique (18a-c), déplacement vers l'extérieur du deuxième élément optique (18a-c) et déplacement vers l'intérieur du troisième élément optique (18a-c) ;
e) déplacement vers l'intérieur du premier élément optique (18a-c) ;
f) déplacement vers l'extérieur du premier élément optique (18a-c) et déplacement vers l'intérieur du deuxième élément optique (18a-c) ;
g) déplacement vers l'intérieur du premier élément optique (18a-c).

7. Dispositif selon l'une des revendications précédentes, dans lequel le dispositif (10) comporte un ou plusieurs ressorts (36-c) pour déplacer les leviers (34a-c) dans une position prédéfinie dans l'état sans actionnement du dispositif de réglage (22).

8. Dispositif selon l'une des revendications précédentes, dans lequel le dispositif de réglage comporte une réduction à engrenage droit (30) et dans lequel le disque à échelons (32) peut être entraîné par la réduction à engrenage droit (30) du dispositif de réglage (22).

9. Dispositif selon l'une des revendications précédentes, dans lequel le dispositif de réglage (22) comporte un arbre flexible (28).

10. Dispositif selon l'une des revendications précédentes, dans lequel les éléments optiques (18a-c) comportent chacun un absorbeur.

11. Dispositif selon la revendication 11, dans lequel les absorbeurs comportent chacun une plaque de CaF₂.

12. Procédé de modulation d'un faisceau (12) avec un dispositif (10) selon l'une des revendications précédentes, dans lequel le dispositif (10) comporte au moins deux leviers (34a-c) comportant chacun un élément optique (18a-c), le procédé comportant les étapes de procédé successives suivantes :
a) déplacement vers l'intérieur du premier élément optique (18a-c) dans le trajet du faisceau (20) ;
b) déplacement vers l'extérieur du premier élément optique (18a-c) hors du trajet du faisceau (20) et déplacement vers l'intérieur du deuxième élément optique (18a-c) ;
c) déplacement vers l'intérieur du premier élément optique (18a-c).
